# EUROPEAN PATENT APPLICATION

(11) **EP 4 742 311 A1**
(43) Date of publication of application: **13.05.2026**
(21) Application number: 25214261.7
(22) Date of filing: 07.11.2025
(51) Int. Cl.: H01M 4/04, H01M 10/04, H01M 10/0525, H01M 10/0583, H01M 50/531, H01M 50/536, H01M 50/538, H01M 50/543

(54) **ELECTRODE AND SECONDARY BATTERY**

(30) Priority: 12.11.2024 KR 20240159843
(71) Applicant: SAMSUNG SDI CO., LTD., Yongin-si, Gyeonggi-do 17084 (KR)
(72) Inventor: Kim, Gwi Jae, Suwon-si, Gyeonggi-do 16678 (KR); Jung, Won Il, Suwon-si, Gyeonggi-do 16678 (KR)
(74) Representative: Meissner Bolte Partnerschaft mbB

(57) **Abstract**

The present invention relates to an electrode (200), and a technical problem to be solved is to provide an electrode (200) that prevents a substrate (210) from being damaged by a tab (230). To this end, the present invention provides an electrode (200) including: a substrate (210); an active material layer (220) provided on a part of the substrate (210); and a tab (230) in contact with the substrate (210), wherein at least a portion of the tab (230) is located on the active material layer (220).

## Description

### BACKGROUND

### 1. Field of the Invention

The present invention relates to an electrode and a secondary battery capable of preventing cracks from occurring in a substrate.

### 2. Discussion of Related Art

Secondary batteries are batteries that can be charged and discharged, unlike primary batteries that cannot be recharged. Low-capacity secondary batteries are used in small portable electronic devices such as smartphones, feature phones, notebook computers, digital cameras, and camcorders, while high-capacity secondary batteries are widely used as power sources for motors in hybrid vehicles, electric vehicles, and the like, and as power storage batteries. These secondary batteries include electrode(s) having a positive electrode and/or a negative electrode, an electrode assembly including the electrode(s), a case accommodating the electrode assembly, an electrode terminal connected to the electrode assembly, and the like.

An electrode includes a substrate and an active material layer formed on the substrate. The active material layer includes an active material. In addition, the electrode may include a tab attached on the substrate. An electrode assembly including such electrodes can be, for example, wound to form a jellyroll (i.e., multiple electrodes stacked on top of one another and wound together, resulting in a cylindrical wound structure).

When a secondary battery is charged, the electrodes may expand. In such a case, the substrate may be deformed as the electrode is compressed by expansion. In particular, stress applied to the substrate may be concentrated at the tab boundary, which is an area where the tab is attached in the substrate. Accordingly, the tab boundary may reach its local elongation limit, and cracks may occur at the tab boundary.

As the demand for high-capacity secondary batteries has increased in recent years, substrates are trending toward becoming thinner. Accordingly, cracks may occur more easily in the substrate.

When cracks occur in the electrode, the resistance of the secondary battery increases, heat is generated around the crack, and/or the capacity of the secondary battery decreases, which causes a decrease in the reliability of secondary batteries.

The above-described information disclosed in the background technology of this invention is only intended to improve understanding of the background of the present invention and therefore may include information that does not constitute the related art.

### SUMMARY

One embodiment of the present invention relates to an electrode and/or a secondary battery that mitigate(s) cracks from occurring in a substrate.

One embodiment of the present invention relates to an electrode and/or a secondary battery that mitigate(s) stress from being concentrated on a substrate by a tab.

However, the technical problems to be achieved by the present invention are not limited to the above-mentioned problems, and other problems that are not mentioned will be clearly understood by those skilled in the art from the following description.

According to the present invention for solving the above technical problem, an electrode includes: a substrate; an active material layer provided on a part of the substrate; and a tab in contact with the substrate, wherein at least a portion of the tab is located on the active material layer.

According to the present invention for solving the above technical problem, a secondary battery includes: an electrode assembly formed by winding an electrode and a separator; and a case accommodating the electrode assembly, wherein the electrode includes a substrate, an active material layer provided on a part of the substrate, and a tab in contact with the substrate, wherein at least a portion of the tab is located on the active material layer.

### BRIEF DESCRIPTION OF THE DRAWINGS

The following drawings attached to the present specification illustrate preferred embodiments of the present invention and, together with the detailed description of the invention described hereinafter, serve to help further understand the technical idea of the present invention, therefore the present invention is not limited to matters described in such drawings, in which:
FIG. 1 is a cross-sectional view schematically illustrating an example of a cylindrical secondary battery according to one embodiment of the present invention;
FIG. 2 is a cross-sectional view illustrating an example of an electrode;
FIG. 3 is a cross-sectional view illustrating an example of an electrode assembly;
FIG. 4 is a cross-sectional view illustrating an example of an electrode according to one embodiment of the present invention;
FIG. 5 is a cross-sectional view illustrating an example of an electrode according to one embodiment of the present invention;
FIG. 6 is a top view illustrating an example of an electrode according to one embodiment of the present invention;
FIG. 7 is a cross-sectional view illustrating an example of the thickness of a tab according to one embodiment of the present invention;
FIG. 8 is a cross-sectional view illustrating an example of a reinforcing layer according to one embodiment of the present invention;
FIG. 9 is a top view illustrating an example of a welded portion according to one embodiment of the present invention;
FIG. 10 is a top view illustrating an example of a welded portion according to one embodiment of the present invention; and
FIG. 11 is a cross-sectional view illustrating an example of an insulating tape according to one embodiment of the present invention.

### DETAILED DESCRIPTION OF EXEMPLARY EMBODIMENTS

Hereinafter, preferred embodiments of the present invention will be described in detail with reference to the accompanying drawings. Prior to this, the terms or words used in the specification and claims should not be interpreted as limited to their usual or dictionary meanings, and should be interpreted in meanings and concepts that are consistent with the technical concept of the present invention based on the principle that the present inventor can appropriately define the concepts of the terms in order to explain her or her invention in its best way. Accordingly, it should be understood that the configurations shown in the drawings and the embodiments described herein are only preferred embodiments of the present invention and are not intended to represent all of the technical ideas of the invention, and that there may be various equivalents and modifications that may be substituted for them at the time of this application.

In addition, when used herein, the terms "include," and "comprise," and/or "comprising," and "including" specify the presence of stated features, numbers, steps, operations, members, elements and/or groups thereof, but do not exclude the presence or addition of one or more other features, numbers, steps, operations, members, elements and/or groups thereof.

In addition, to aid understanding of the invention, the accompanying drawings are not drawn to scale and the dimensions of some components may be exaggerated. In addition, the same reference numbers may be assigned to the same components in different embodiments.

When two things being compared are said to be "same", it means they are "substantially the same." Therefore, "substantially same" may include deviations that are considered low in the art, for example, deviations of less than 5%. In addition, uniformity of a parameter in a given area may imply uniformity from an average point of view.

Although "first," "second," and the like are used to describe various components, these components are not limited by these terms. These terms are used only to distinguish one component from another, and unless specifically stated otherwise, it is to be understood that a first component may also be a second component.

Throughout the specification, unless specifically stated otherwise, each element may be singular or plural.

The arrangement of an arbitrary component on the "upper portion (or lower portion)" of a component or "above (or below)" the component means that the arbitrary component is not only disposed in contact with the upper surface (or lower surface) of the component, but also other components may be interposed between the component and the arbitrary component disposed on (or under) the component.

In addition, when a component is described as being "connected," "coupled," or "linked" to another component, it is to be understood that the components may be directly coupled or connected to one another, but that other components may be "interposed" between the components, or that each component may be "connected," "coupled," or "linked" through another component. In addition, when a portion is "electrically coupled" to another part, this includes not only the case where it is "directly connected" but also the case where it is "connected" with another member or element interposed therebetween.

Whenever reference is made throughout the specification to "A and/or B," this means A, B, or A and B, unless otherwise specified. That is, "and/or" includes all or any combination of the listed items. When "C to D" is described, this means C or more and D or less, unless otherwise specified.

The terminology used herein is for the purpose of describing embodiments of the present invention and is not intended to limit the present invention.

In the present specification, an X axis represents a width direction of the tab. In the present specification, an Y axis represents a thickness direction of the tab. The Y axis represents a direction perpendicular to the X axis. In the present specification, a Z axis represents a longitudinal direction of the tab. The Z axis represents a direction perpendicular to each of the X axis and the Y axis.

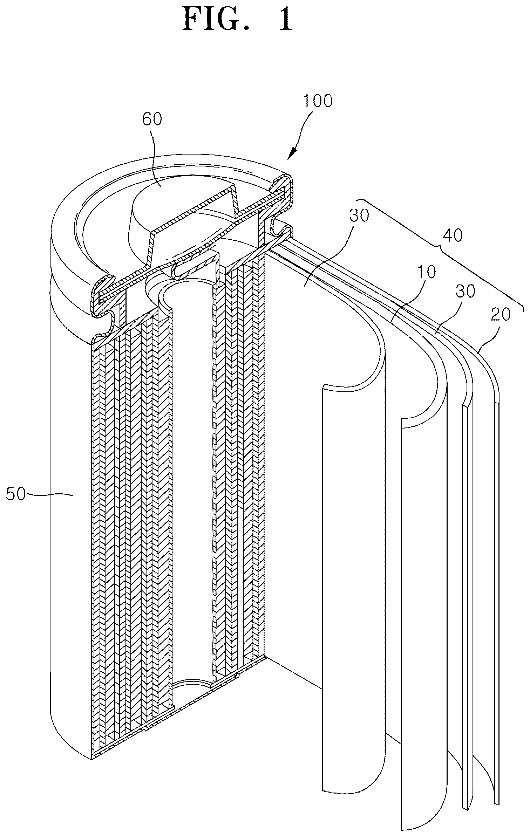

FIG. 1 is a cross-sectional view schematically illustrating an example of a cylindrical secondary battery according to one embodiment of the present invention;
As shown in FIG. 1, a cylindrical lithium ion secondary battery 100 according to one embodiment of the present invention may include a cylindrical case 50, an electrode assembly 40, and a cap assembly 60. In addition, the cylindrical lithium ion secondary battery 100 may further include a center pin (not shown) in some cases. In addition, in the secondary battery 100 according to the embodiment of the present invention, since the cap assembly 60 also performs a current interruption operation, it is also referred to as a current interruption device in some cases.

The cylindrical case 50 may include a substantially circular bottom portion and a cylindrical side wall extending a certain length upward from the circumference of the bottom portion. During the manufacturing process of the secondary battery, a top portion of the cylindrical case 50 is open. Therefore, during the assembly process of the secondary battery, the electrode assembly 40 and the center pin may be inserted into the cylindrical case 50 together with an electrolyte. The cylindrical case 50 may be manufactured from, for example but not limited to, steel, stainless steel, aluminum, an aluminum alloy, or an equivalent thereof.

The electrode assembly 40 may be accommodated inside the cylindrical case 50. The electrode assembly 40 may include a negative electrode 20 in which a negative electrode current collector is coated with a negative electrode active material (e.g., graphite, carbon, and the like), a positive electrode 10 in which a positive electrode current collector is coated with a positive electrode active material (e.g., a transition metal oxide (LiCoO₂, LiNiO₂, LiMn₂O₄, and the like)), and a separator 30 located between the negative electrode 20 and the positive electrode 10 to prevent short circuits and allow only the movement of lithium ions. In addition, the negative electrode 20, the positive electrode 10 and the separator 30 may be wound into a substantially cylindrical shape.

The cap assembly 60 includes an upper cap. The cap assembly 60 may further include at least one of a lower cap, a vent, and an insulator. This cap assembly 60 is coupled to an opening of the cylindrical case 50 to seal the electrode assembly 40 inside the cylindrical case 50.

However, the present invention is not limited thereto, and the case may have various shapes such as a circular shape, a pouch-type shape, and the like. In addition, the case may be composed of a metal such as aluminum, an aluminum alloy, and nickel-plated steel, or a laminated film or plastic forming the pouch.

Meanwhile, as described above, the electrode assembly 40 includes the negative electrode 20, the positive electrode 10, and the separator 30 located between the negative electrode 20 and the positive electrode 10. In addition, the electrode assembly 40 is accommodated in the cylindrical case 50 together with an electrolyte (not shown). Hereinafter, the electrode assembly 40 and the electrolyte will be described.

### Positive electrode 10

As the positive electrode active material, a compound capable of reversible intercalation and deintercalation of lithium (lithiated intercalation compound) may be used. Specifically, at least one of composite oxides of lithium and a metal selected from cobalt, manganese, nickel, and a combination thereof may be used.

The composite oxide may be a lithium transition metal composite oxide, and specific examples thereof may include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode 10 for the lithium secondary battery 100 may include a current collector and a positive electrode active material layer formed on the current collector. The positive electrode active material layer includes a positive electrode active material and may further include a binder and/or a conductive material.

The content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

Al may be used as the current collector, but the present invention is not limited thereto.

### Negative electrode 20

The negative electrode active material includes a material capable of reversibly intercalating/deintercalating lithium ions, a lithium metal, an alloy of lithium and a metal, a material capable of doping and dedoping lithium, or a transition metal oxide.

The material capable of reversibly intercalating/deintercalating lithium ions may be a carbon-based negative electrode active material, and for example, may include crystalline carbon, amorphous carbon, or a combination thereof. Examples of the crystalline carbon may include graphite such as natural graphite or artificial graphite, and examples of the amorphous carbon may include soft carbon, hard carbon, mesophase pitch carbide, calcined coke, and the like.

As the material capable of doping and dedoping lithium, a Si-based negative electrode active material or a Sn-based negative electrode active material may be used. The Si-based negative electrode active material may be silicon, a silicon-carbon composite, SiOₓ (0 < x ≤ 2, e.g. SiO₂), a Si-based alloy, or a combination thereof.

The silicon-carbon composite may be a composite of silicon and amorphous carbon. According to one embodiment, the silicon-carbon composite may be in the form of silicon particles whose surface is coated with amorphous carbon.

The silicon-carbon composite may further include crystalline carbon. For example, the silicon-carbon composite may include a core including crystalline carbon and silicon particles and an amorphous carbon active material layer located on the surface of the core.

The negative electrode 20 for the lithium secondary battery 100 includes a current collector and a negative electrode active material layer located on the current collector. The negative electrode active material layer includes a negative electrode active material and may further include a binder and/or a conductive material.

For example, the negative electrode active material layer may include 90 to 99 wt% of the negative electrode active material, 0.5 to 5 wt% of the binder, and 0 to 5 wt% of the conductive material.

The binder may include a non-aqueous binder, an aqueous binder, a dry binder, or a combination thereof. When an aqueous binder is used as the negative electrode binder, a cellulose-based compound capable of imparting viscosity may be further included.

As the negative electrode current collector, any material selected from a copper foil, a nickel foil, a stainless steel foil, a titanium foil, a nickel foam, a copper foam, a polymer substrate coated with a conductive metal, and a combination thereof may be used.

The electrolyte for the lithium secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof, and may be used alone or in combination of two or more thereof.

In addition, when the carbonate-based solvent is used, a cyclic carbonate and a chain carbonate may be used in combination.

### Separator 30

Depending on the type of lithium secondary battery 100, the separator 30 may be present between the positive electrode 10 and the negative electrode 20. As the separator 30, polyethylene, polypropylene, polyvinylidene fluoride, or a multilayer film of two or more thereof may be used.

The separator 30 may include a porous substrate, and an active material layer including an organic material, an inorganic material, or a combination thereof and located on one side or both sides of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one active material layer or may be present in a form in which an active material layer including an organic material and an active material layer including an inorganic material are stacked.

### Electrolyte (not shown)

The electrolyte for the secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent include methyl acetate, ethyl acetate, n-propyl acetate, dimethyl acetate, methyl propionate, ethyl propionate, decanolide, mevalonolactone, and valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. Ethyl alcohol, isopropyl alcohol, and the like may be used as the alcohol-based solvent, and nitriles such as R-CN (where R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes; and the like may be used as the aprotic solvent.

The non-aqueous organic solvent may be used alone or in a combination of two or more.

In addition, when the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and acts as a source of lithium ions within the battery, enabling the basic operation of the secondary battery and promoting the movement of lithium ions between the positive electrode and the negative electrode. Representative examples of the lithium salt may include one or two or more selected from LiPF₆, LiBF₄, LiSbF₆, LiAsF₆, LiClO₄, LiAlO₂, LiAlCl₄, LiPO₂F₂, LiCl, LiI, LiN (SO₃C₂F₅)₂, Li(FSO₂)₂N (lithium bis(fluorosulfonyl)imide (LiFSI)), LiC₄F₉SO₃, LiN (CₓF₂ₓ₊₁SO₂) (C_{y}F_{2y+1}SO₂) (where x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

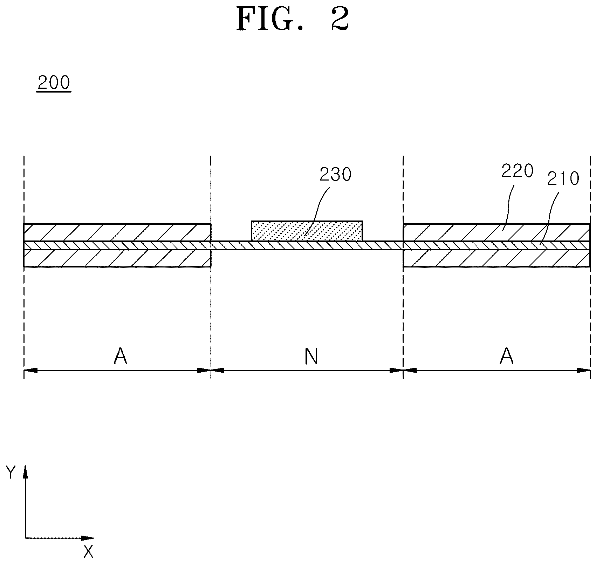

FIG. 2 is a cross-sectional view illustrating an example of an electrode.

In FIG. 2, 200 represents an electrode according to one embodiment of the present invention.

The electrode 200 includes a substrate 210, an active material layer 220 provided on a part of the substrate 210, and a tab 230 having one side in contact with a part of the substrate 210 and the other side extending away from the substrate 210.

Hereinafter, each component of the electrode 200 will be described in detail.

The electrode assembly 40 includes a positive electrode 10 and/or a negative electrode 20. For example, as described in FIG. 1, the electrode assembly 40 according to one embodiment of the present invention includes the positive electrode 10 and the negative electrode 20. As illustrated, the electrode 200 according to one embodiment of the present invention may be applied as the positive electrode 10 included in the electrode assembly 40. In such a case, the electrode 200 according to one embodiment of the present invention may be applied as the negative electrode 20 included in the electrode assembly 40. Furthermore, the electrode 200 according to one embodiment of the present invention may be applied as both the positive electrode 10 and the negative electrode 20 included in the electrode assembly 40.

The substrate 210 includes the current collector described above. When the electrode 200 is the positive electrode 10 the substrate 210 includes a positive electrode current collector. The positive electrode current collector includes, for example, aluminum (Al). When the electrode 200 is the negative electrode 20 the substrate 210 includes a negative electrode current collector. The negative current collector includes, for example, copper (Cu).

The active material layer 220 includes the active material layer described above. When the electrode 200 is the positive electrode 10, the active material includes a positive electrode active material. When the electrode 200 is the negative electrode 20, the active material includes a negative electrode active material. In addition, the active material layer 220 may further include a binder and/or a conductive material.

The active material layer 220 may be coated by being applied on the substrate 210 in the form of a slurry including the active material. Through this, the electrode 200 may form a wet electrode. Alternatively, the active material layer 220 may be attached to the substrate 210 in the form of a freestanding film including the active material. Through this, the electrode 200 may form a dry electrode.

The active material layer 220 is provided on a part of the substrate 210. For example, the active material layer 220 is provided on a part of one surface of the substrate 210. Alternatively, for example, as illustrated in FIG. 2, the active material layer 220 is provided on parts of both surfaces of the substrate 210. In such a case, an area where the active material layer 220 is provided on a part of the substrate 210 may be conveniently referred to as a coated portion A. In addition, as the other part of the substrate 210, an area where the active material layer 220 is not provided and the substrate 210 is exposed to the outside may be conveniently referred to as an uncoated portion N.

One side of the tab 230 is attached on the substrate 210. The other side of the tab 230 is not attached on the substrate 210 but extends outward from the substrate 210.

The tab 230 can include a middle tab, the active material layers 220 being provided on both sides of the tab 230, as illustrated in FIG. 2. Alternatively, for example, the tab 230 may be attached to an end of the substrate 210 unlike what is illustrated in FIG. 2. In this way the tab 230 can include all kinds of tabs having at least one side provided on the substrate 210.

The tab 230 provides a passage through which the outside and the electrode 200 may be electrically connected. For this purpose, the tab 230 includes a conductive material. For example, the tab 230 includes a metallic material. When the electrode 200 is a positive electrode, the tab 230 may include aluminum or an aluminum alloy. When the electrode 200 is a negative electrode, the tab 230 may include nickel, nickel plated steel, and/or alloys thereof. Through this, electrons may move along the tab 230 to the electrode 200 or move to the outside from the electrode 200 through the tab 230.

The tab 230 can be joined to the substrate 210. For example, the tab 230 may be attached to the substrate 210 via a conductive tape or an adhesive material. Alternatively, when the tab 230 includes a metallic material, the tab 230 may be joined to the substrate 210 by welding. For example, the tab 230 may be joined to the substrate 210 by various welding methods such as ultrasonic welding, laser welding, and the like.

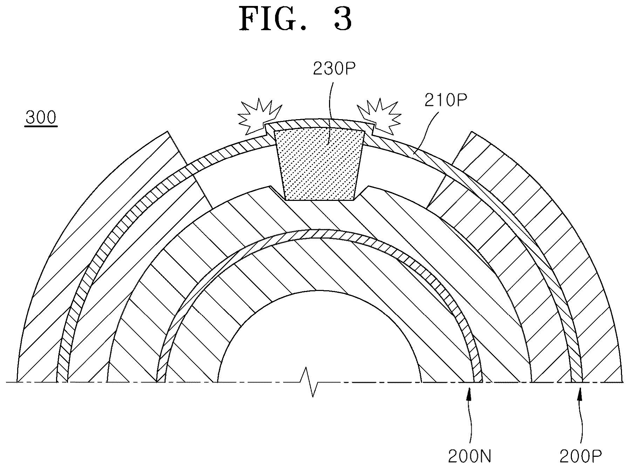

FIG. 3 is a cross-sectional view illustrating an example of an electrode assembly.

The electrode 200 includes the tab 230. In such a case, as the secondary battery 100 performs charging and discharging or deteriorates, the electrode 200 may repeatedly expand and contract. When this occurs the substrate 210 receives a force from the separator and/or electrodes located in front and behind the substrate 210.

For example, an electrode assembly 300 (e.g., including the electrode assembly 40 described in FIG. 1) includes a positive electrode 200P (e.g., including the positive electrode 10 described in FIG. 1) and a negative electrode 200N (e.g., including the negative electrode 20 described in FIG. 1). For convenience of explanation, the illustration of a separator 30 located between the positive electrode 200P and the negative electrode 200N is omitted. The positive electrode 200P and the negative electrode 200N are wound to form a jelly roll.

The positive electrode 200P includes a positive electrode substrate 210P and a positive electrode tab 230P.

The positive electrode tab 230P may receive a force from the negative electrode 200N as the negative electrode 200N expands. The positive electrode tab 230P may apply stress to the positive electrode substrate 210P. In particular, the positive electrode substrate 210P may be pressed more significantly in an area in contact with an edge of the positive electrode tab 230P. Accordingly, cracks may occur in the positive electrode substrate 210P.

In this way, when cracks occur in the substrate 210 or damage occurs in the electrode 200, the reliability of the secondary battery 100 may be reduced or safety problems may arise. Therefore, a solution to solve these problems is required.

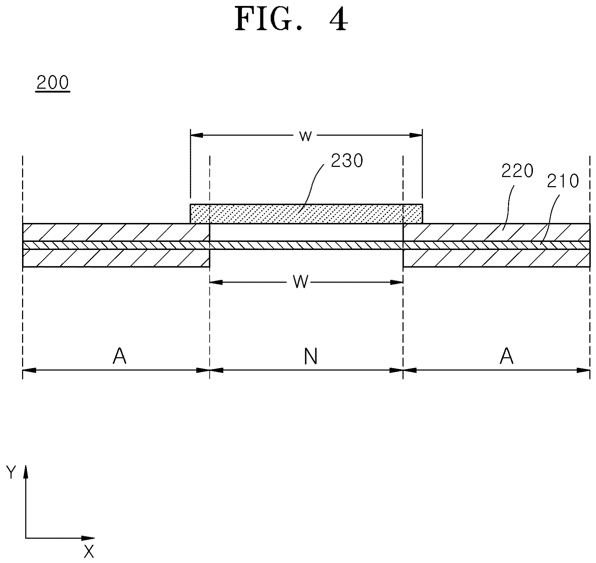

FIG. 4 is a cross-sectional view illustrating an example of an electrode according to one embodiment of the present invention.

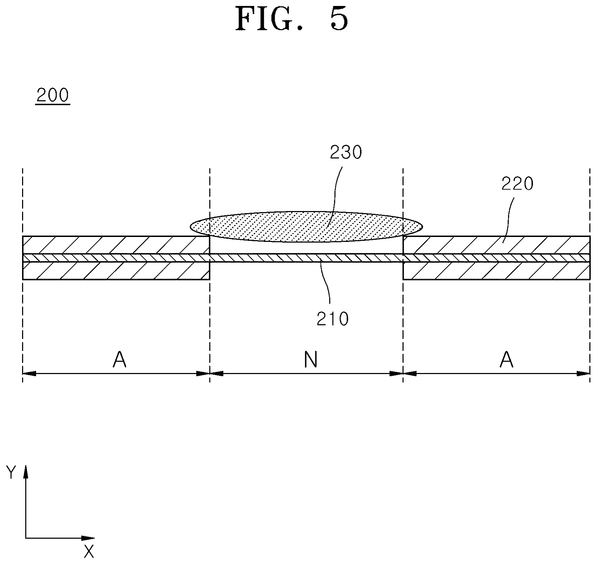

FIG. 5 is a cross-sectional view illustrating an example of an electrode according to one embodiment of the present invention.

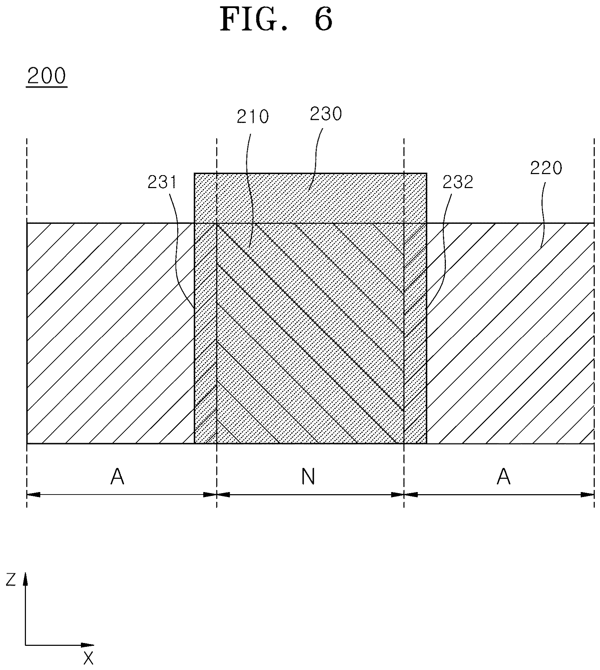

FIG. 6 is a top view schematically showing an example of an electrode according to one embodiment of the present invention.

An electrode 200 according to one embodiment of the present invention includes a substrate 210, an active material layer 220 provided on a part of the substrate 210, and a tab 230 in contact with the substrate 210, where at least a part of the tab 230 is located on the active material layer 220. In the description of the electrode 200, the same or similar contents as described for FIGS. 1 to 3 are omitted.

FIGS. 4 and 5 show exemplary cross-sectional views of the tab 230 on the XY plane, and FIG. 6 shows a top view example of the tab 230 on the XZ plane.

As shown in FIGS. 4 and 5, the tab 230 is formed to be longer in the width direction (X axis) than in the thickness direction (Y axis).

As illustrated in FIG. 4, for example, the tab 230 may be formed in a shape with a constant thickness in the cross section. For example, the tab 230 may be formed to have a polygonal cross-section. For example, the tab 230 may be formed to have a rectangular cross-section. Through this, the tab 230 may be stably joined to the substrate 210 and/or manufactured with high process efficiency.

Alternatively, as illustrated in FIG. 5, for example, the tab 230 may be formed in a shape with a non-uniform thickness in the cross section. For example, the tab 230 may be formed in a shape that is relatively thick at the center and relatively thin at the edges. For example, the tab 230 may be formed to have a cross section of an elliptical shape, a shape where two curved surfaces meet, or the like. This allows the tab 230 to be more easily joined to the substrate 210, and/or further reduces the stress that the edge of the tab 230 applies on the substrate 210 and/or the active material layer 220.

As illustrated in FIG. 6, the tab 230 may be formed in a shape that is longer in the longitudinal direction (Z axis) than in the width direction (X axis).

In the longitudinal direction (Z axis), the tab 230 is formed such that one side is in contact with the substrate 210 and the other side facing the one side extends away from the substrate 210.

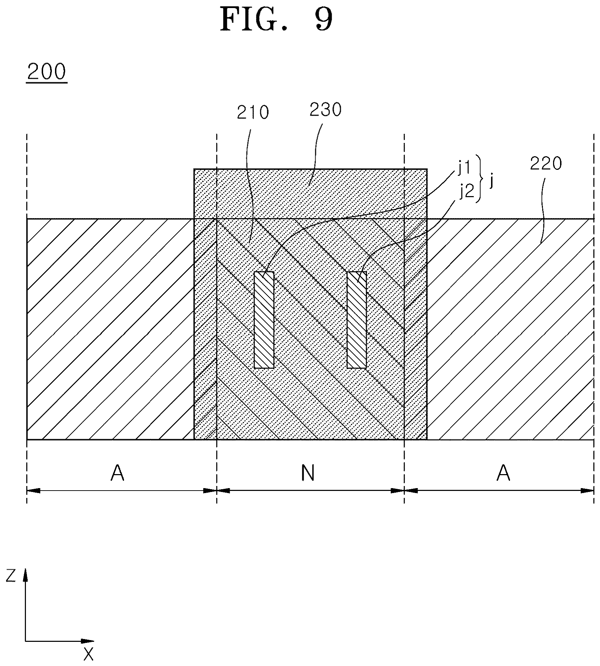

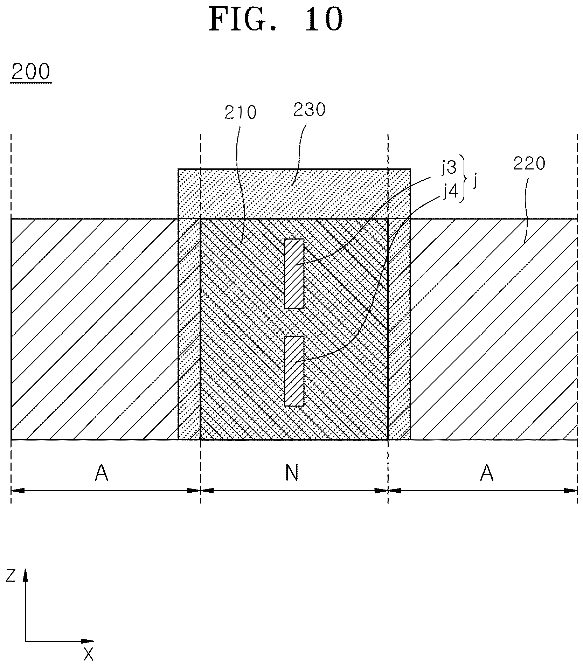

In FIGS. 4 and 5, the tab 230 is depicted as being spaced apart from the substrate 210, but as described in FIGS. 9 and 10 below, at least a part of one side (e.g., a first side) of the tab 230 is in contact with the substrate 210.

For example, one side of the tab 230 contacts at least a part of an uncoated portion N. Through this, the tab 230 may be electrically connected to the substrate 210, and the electrode 200 may be electrically connected to the outside through the tab 230.

The other side (e.g., a second side) of the tab 230 extends away from the substrate 210. Accordingly, the other side of the tab 230 is not located on the substrate 210. The other side of the tab 230 is electrically connected to, for example, a cap assembly 60, a current collector plate (not shown), a cylindrical case 50, and the like. Through this, the tab 230 allows the electrode 200 and the outside to be electrically connected.

As illustrated in FIG. 6, for example, the tab 230 includes a first edge 231 connecting one side of the tab 230 and the other side of the tab 230. The first edge 231 is an area of the tab 230 closest to the substrate 210 in the thickness direction (Y axis) of the tab 230. In addition, the first edge 231 is an area located at the edge of the tab 230 in the width direction (X axis) of the tab 230.

The tab 230 may be formed so that at least a part of the first edge 231 is located on the active material layer 220. The tab 230 may be located so that at least part of the first edge 231 is in contact with the active material layer 220. The tab 230 may be formed such that the first edge 231 extends outward from not only the substrate 210 but also the active material layer 220.

The tab 230 is formed so that the first edge 231 is located on the substrate 210, but not directly on the substrate 210. That is, at least a part of the first edge 231 may be located on the substrate 210 with the active material layer 220 interposed therebetween. Accordingly, the tab 230 cannot directly press the substrate 210 through the first edge 231 when expansion of the electrode occurs.

Through this, the electrode 200 may prevent cracks from occurring in the substrate 210.

For example, the tab 230 may further include a second edge 232. The second edge 232 connects one side of the tab 230 and the other side of the tab 230. The second edge 232 is an area of the tab 230 closest to the substrate 210 in the thickness direction (Y axis) of the tab 230. In addition, the second edge 232 is an area located at the edge of the tab 230 in the width direction (X axis) of the tab 230. In addition, the second edge 232 is an area located farthest from the first edge 231 in the width direction (X axis) of the tab 230. For example, the second edge 232 may be located opposite the first edge 231.

The second edge 232 may be located at least partially on the active material layer 220. Accordingly, the tab 230 may be formed such that the second edge 232 extends outward from not only the substrate 210 but also the active material layer 220.

The tab 230 may be formed so that the second edge 232 is located on the substrate 210, but not directly on the substrate 210. That is, at least a part of the second edge 232 may be located on the substrate 210 with the active material layer 220 interposed therebetween. Accordingly, the tab 230 cannot directly press the substrate 210 through the second edge 232 when expansion of the electrode occurs.

Through this, the electrode 200 may prevent cracks from occurring in the substrate 210.

Meanwhile, the tab 230 may be disposed so that at least a part of each of the first edge 231 and the second edge 232 located on the active material layer 220. Accordingly, in the width direction (X axis), a width w of the tab 230 may be formed wider than a width W of the uncoated portion N.

Accordingly, one side of the tab 230 may be disposed so that its center joined to the substrate 210 and its edges located on the active material layer 220. In particular, due to this structure, at least a part of a corner portion of the tab 230 is located on the coated portion A.

Through this, the tab 230 prevents the edge of the tab 230 from directly pressing the substrate 210 due to force from expansion of the electrode. That is, the tab 230 cannot press a relatively vulnerable uncoated portion N when expansion of the electrode occurs. Accordingly, the electrode 200 according to one embodiment of the present invention may prevent damage from occurring internally.

Meanwhile, a length of a portion of the tab 230 on the substrate 210 in the longitudinal direction (Z axis) is less than or equal to a length of the substrate 210.

For example, the length of the portion of the tab 230 on the substrate 210 may be the same as the length of the substrate 210. For example, the tab 230 may be disposed so that one side end located so as to correspond to an end of the substrate 210. Through this, the tab 230 may more effectively prevent the edge or corner of the tab 230 from pressing the substrate 210 during expansion of the electrode.

The tab 230 in the width direction (X axis) may extend across the uncoated portion N of the substrate 210, and may extend from a coated portion A to the other coated portion A. In this case, the tab 230 may be extended longer in the width direction on one side and relatively shorter on the other side. Through this, the electrode 200 may further prevent the tab 230 from applying stress to the uncoated portion N.

Alternatively, for example, the length of the tab 230 on the substrate 210 may be shorter than the length of the substrate 210. Even in this case, the tab 230 according to one embodiment of the present invention may be disposed so that the first edge 231 and the second edge 232 are located on the active material layer 220. Accordingly, the tab 230 may prevent the corner portion, the first edge 231 and/or the second edge 232 of the tab 230 from applying stress to the substrate 210 and causing cracks in the uncoated portion N.

Furthermore, in the XZ plane, the area of the tab 230 on the substrate 210 may be formed to be wider than the area of the uncoated portion N. In addition, in the XZ plane, the width of the tab 230 may be formed to be larger than the width of the uncoated portion N. In this case, all edges of the tab 230 are provided in a position where it is difficult to apply stress to the uncoated portion N. Accordingly, the electrode 200 may mitigate the tab 230 from causing cracks in the uncoated portion N.

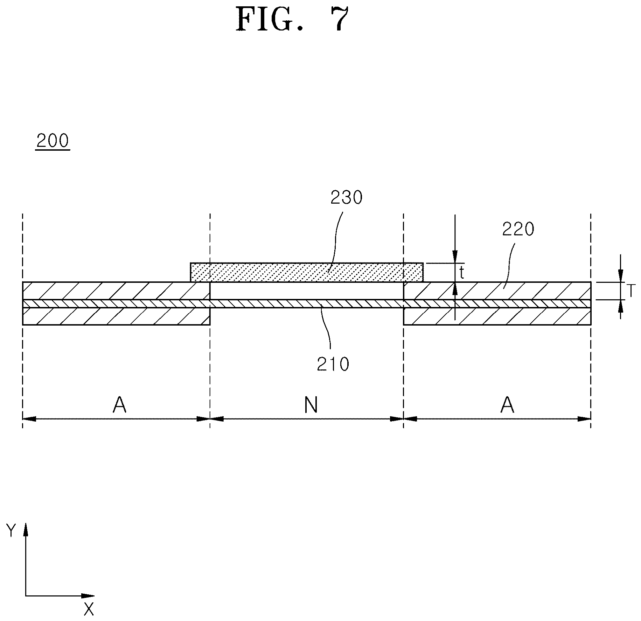

FIG. 7 is a cross-sectional view illustrating an example of the thickness of a tab according to one embodiment of the present invention.

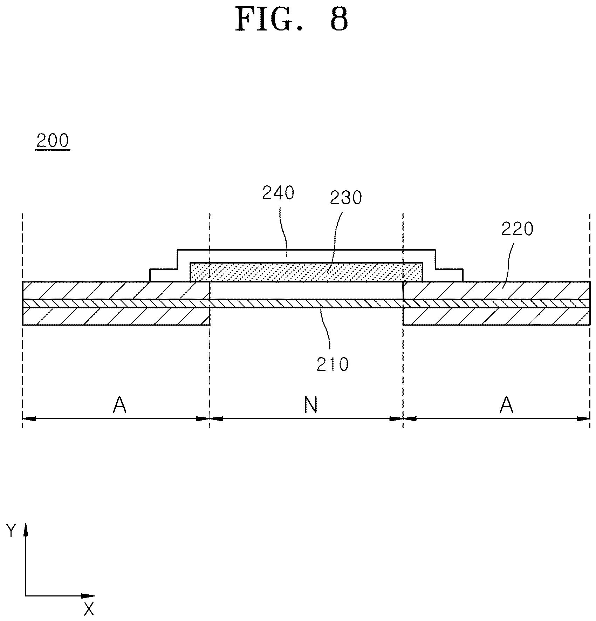

FIG. 8 is a cross-sectional view illustrating an example of a reinforcing layer according to one embodiment of the present invention.

In FIGS. 7 and 8, 200 represents an electrode according to one embodiment of the present invention (e.g., including the electrodes described in FIGS. 1 to 6).

As described above, the electrode 200 includes a tab 230 formed to have a relatively wide width w. In such a case, the electrode 200 is wound to form an electrode assembly 40. As the electrode 200 is wound, the tab 230 is also required to be wound.

Accordingly, the tab 230 needs to be formed with a thickness that is thin enough to be wound. For example, the tab 230 can be formed with a thickness of 100 um or less. Alternatively, for example, the tab 230 can be formed with a thickness of 95 um or less. As yet another example, the tab 230 can be formed with a thickness of 90 um or less. In another example, the tab 230 can be formed with a thickness of 85 um or less. In still another example, the tab 230 can be formed with a thickness of 80 um or less. When the thickness of the tab 230 exceeds 100 um, the tab 230 cannot be wound and may instead damage the adjacent electrode 200. Therefore, it is preferable that the tab 230 is formed with a thickness of 100 um or less.

For example, the tab 230 is formed with a thickness t less than or equal to a thickness T of the active material layer 220. Through this, the tab 230 may be easily wound.

The electrode 200 may further include a reinforcing layer 240 provided on (e.g. attached on) at least a part of the tab 230. The reinforcing layer 240 may be located on the substrate 210 while covering the tab 230. Furthermore, the reinforcing layer 240 may be located on a part of the active material layer 220 while covering the tab 230.

The reinforcing layer 240 may reinforce the strength of the tab 230. In addition, the reinforcing layer 240 may protect the tab 230.

The reinforcing layer 240 may be formed in the form of a tape that may be attached to the tab 230.

For example, the reinforcing layer 240 may include a conductive polymer. In addition, the reinforcing layer 240 may further include an adhesive material that adheres the conductive polymer to the tab 230.

Alternatively, the reinforcing layer 240 may be fixed on the tab 230 through joining with the tab 230.

The reinforcing layer 240 may include a metal. For example, when the electrode 200 is the positive electrode 10, the reinforcing layer 240 may include aluminum, a metal coated with aluminum, aluminum coated with another material, or an alloy including aluminum. Alternatively, when the electrode 200 is the negative electrode 20, the reinforcing layer 240 may include copper, a metal coated with copper, copper coated with another material, or an alloy including copper. In this way, the reinforcing layer 240 may include the same material as the tab 230. Through this, the reinforcing layer 240 may improve the welding strength with the tab 230.

However, the material included in the reinforcing layer 240 may include not only the same material as the material included in the tab 230, but also any material that has good weldability with the material included in the tab 230. For example, when the tab 230 includes copper, the reinforcing layer 240 may include at least one selected from materials having good weldability with copper, for example, iron (Fe), SUS, nickel (Ni), gold (Ag), silver (Au), or a combination thereof.

Alternatively, the tab 230 can be formed with a thickness t that exceeds the thickness T of the active material layer 220. For example, the tab 230 may be formed with a thickness t that is less than or equal to 100 um and exceeds the thickness T of the active material layer 220. In this case, the tab 230 may be wound and have high strength without a separate reinforcing layer 240.

Through this structure, the tab 230 may be formed with an appropriate thickness t.

FIG. 9 is a top view illustrating an example of a welded portion according to one embodiment of the present invention.

FIG. 10 is a top view illustrating an example of a welded portion according to one embodiment of the present invention.

In FIGS. 9 and 10, 200 represents an electrode according to one embodiment of the present invention (e.g., including the electrodes described in FIGS. 1 to 8).

For example, the tab 230 is electrically connected to the substrate 210 while forming a welded portion j with the substrate 210. The tab 230 may be in contact with the substrate 210 via the welded portion j.

The welded portion j may be formed by joining the tab 230 and the substrate 210 through welding. The welded portion j may be formed by joining a part of the tab 230 and at least a part of the uncoated portion N. For example, the welded portion j may be formed by various joining methods such as ultrasonic welding, laser welding, and the like. Through this, the electrode 200 may be disposed so that a part of the tab 230 located on the active material layer 220 and the other part electrically connected to the substrate 210.

For example, the welded portion j may include a first welded portion j1 or j3 and a second welded portion j2 or j4, which are located spaced apart from each other. For example, as illustrated in FIG. 9, the welded portion j may include the first welded portion j1 and the second welded portion j2 that are located spaced apart in the width direction (X axis). Alternatively, for example, as illustrated in FIG. 10, the welded portion j may include the first welded portion j3 and the second welded portion j4 located spaced apart in the longitudinal direction (Z axis).

Alternatively, although not illustrated, the welded portion j may be formed as one over a wide area. For example, the welded portion j may be formed to have a size less than or equal to the area of the uncoated portion N. For example, the welded portion j may be formed as one welded portion formed long in the longitudinal direction (Z axis).

In this way, the welded portion j may be formed over a wide area or in multiple shapes. This allows the welded portion j to be securely fixed to the substrate 210 even though the tab 230 is formed relatively wide.

Meanwhile, in FIGS. 4 to 8, the weld portion j is omitted for convenience of explanation. Accordingly, the welded portions j described in FIGS. 9 and 10 may be further formed in the embodiments described in FIGS. 4 to 8.

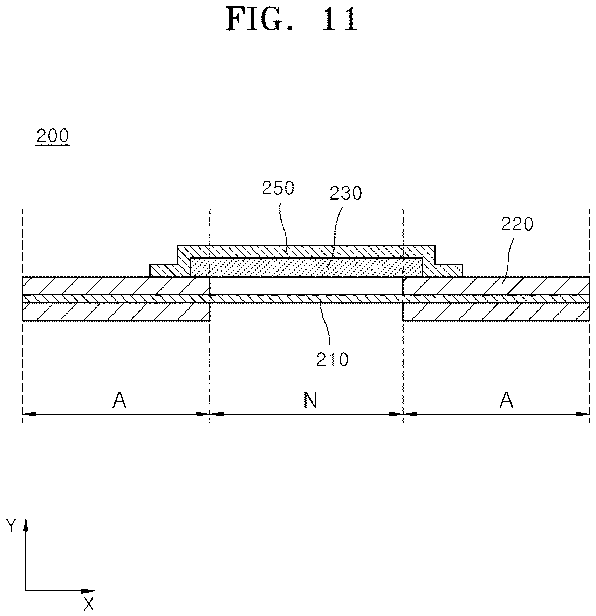

FIG. 11 is a cross-sectional view illustrating an example of an insulating tape according to one embodiment of the present invention.

In FIGS. 11, 200 represents an electrode according to one embodiment of the present invention (e.g., including the electrodes described in FIGS. 1 to 10).

For example, the electrode 200 may further include an insulating tape 250 including an insulating material and covering the tab 230.

For example, when the separator located between the electrodes 200 is torn, the electrodes 200 may come into contact with each other. The insulating tape 250 prevents a short circuit from occurring at the electrode 200 when the tab 230 comes into contact with an adjacent electrode. In addition, the insulating tape 250 protects the tab 230 from an external force.

For this purpose, the insulating tape 250 may be attached to the tab 230.

For example, as illustrated in FIG. 11, the insulating tape 250 may be attached to one surface of the substrate 210 while covering the tab 230. Furthermore, the insulating tape 250 may be attached so as to extend to the upper portion of the active material layer 220 while covering the tab 230.

In addition, unlike that illustrated in FIG. 11, the insulating tape 250 may also be attached to the uncoated portion N where the tab 230 is not located with the substrate 210 therebetween. That is, the insulating tape 250 may be attached to the uncoated portion N and at least a part of the coated portion A, and may be attached to both sides thereof. Through this, the electrode 200 may secure safety in relation to other electrodes and/or separators located on one side and the other side of the electrode 200.

In addition, the insulating tape 250 may be provided together with the reinforcing layer 240 illustrated in FIG. 8. In this case, the electrode 200 may include a tab 230, a reinforcing layer 240 located on at least a part of the tab 230, and an insulating tape 250 located on at least a part of the reinforcing layer 240.

The insulating tape 250 may include an insulating material.

For example, the insulating material may include at least one selected from the group consisting of polyimide (PI), polysulfone, polyurethane (PU), polyamide, 6,6-nylon, polycarbonate (PC), polytetrafluoroethylene (PTFE), polymethyl methacrylate (PMMA), and polyethylene terephthalate (PET).

Meanwhile, the insulating tape 250 may further include an adhesive material to be attached to the substrate 210, the active material layer 220, the tab 230, and/or the reinforcing layer 240 with the adhesiveness of the insulating material.

For example, the adhesive material may include at least one of a silicone-based resin, an acrylic resin, a urethane-based resin, a rubber-based resin, an epoxy resin, a polyolefin, and combinations thereof.

For example, the acrylic resin may include an acryl, an ester copolymer, ethyl acrylate, butyl acrylate, hexyl acrylate, n-octyl acrylate, isooctyl acrylate, 2-ethylhexyl acrylate, isononyl acrylate, lauryl acrylate, acrylic acid, maleic acid, fumaric acid, itaconic acid, kryptonic acid, acrylamide, N-vinyl pyrrolidone, N-vinyl caprolactam, acrylonitrile, acryloyl corpoline, 2-hydroxyethyl acrylate, 2-hydroxypropyl acrylate, 2-hydroxybutyl acrylate, and the like.

For example, the urethane-based resin may include polyurethane and the like.

For example, the rubber-based resin may include natural rubber, synthetic rubber, and the like.

Through this, the electrode 200 according to one embodiment of the present invention can provide protection to each component included in the electrode 200.

The secondary battery according to one embodiment of the present disclosure may include an electrode assembly formed by winding an electrode and a separator; and a case accommodating the electrode assembly, wherein the electrode may include an electrode according to any embodiment above.

According to one embodiment of the present invention, an electrode and/or a secondary battery with improved reliability can be provided.

According to one embodiment of the present invention, an electrode and/or a secondary battery in which crack occurrence is prevented or mitigated can be provided.

However, the effects obtainable through the present invention are not limited to the effects described above, and other technical effects that have not been mentioned will be clearly understood by those skilled in the art from the following description of the invention.

Although the present invention has been described above by means of limited embodiments and drawings, the present invention is not limited thereto, and various modifications and variations can be made by those skilled in the art to which the present invention pertains within the scope of the technical idea of the present invention.

## Claims

1. An electrode (200) comprising:
a substrate (210);
an active material layer (220) provided on a part of the substrate (210); and
a tab (230) in contact with the substrate (210), wherein at least a portion of the tab (230) is located on the active material layer (220).

2. The electrode (200) according to claim 1, wherein the tab (230) is formed such that a first side of the tab (230) is in contact with the substrate (210) and a second side of the tab (230) extends away from the substrate (210), and
the tab (230) includes a first edge (231) connecting the first side and the second side.

3. The electrode (200) of claim 2, wherein at least part of the first edge (231) is located on the active material layer (220).

4. The electrode (200) according to claim 2 or 3, wherein the tab (230) further includes a second edge (232), the second edge (232) located at a furthest location on the tab (230) from the first edge (231) in a width direction of the tab (230), and
wherein at least part of the second edge (232) is located on the active material layer (220).

5. The electrode (200) according to any of the claims 2 to 4, wherein the tab (230) is located so that at least part of the first edge (231) is in contact with the active material layer (220).

6. The electrode (200) according to any of the preceding claims, wherein a length of a portion of the tab (230) on the substrate (210) is the same as or less than a length of the substrate (210).

7. The electrode (200) according to any of the preceding claims, wherein the electrode further comprises:
a coated portion (A) on which the active material layer (220) is provided on the substrate (210); and
an uncoated portion (N) on which the active material layer (220) is not provided on the substrate (210), wherein the tab (230) is formed to have a wider width than the uncoated portion (N).

8. The electrode (200) according to any of the preceding claims, wherein the tab (230) is formed with a thickness (t) less than or equal to a thickness (T) of the active material layer (220), and
the electrode (200) further comprises a reinforcing layer (240) attached on the tab (230).

9. The electrode (200) according to any of claims 1 to 7, wherein the tab (230) has a thickness (t) exceeding a thickness (T) of the active material layer (220).

10. The electrode (200) according to any of the preceding claims, further comprising an insulating tape (250), the insulating tape (250) comprising an insulating material which covers the tab (230).

11. The electrode (200) according to any of the preceding claims, wherein the tab (230) is electrically connected to the substrate (210), and wherein the tab (230) is in contact with the substrate (210) via a welded portion (j).

12. The electrode (200) according to claim 11, wherein the welded portion (j) includes a first welded portion (j1, j3) and a second welded portion (j2, j4), which are located spaced apart from each other.

13. A secondary battery (100) comprising:
an electrode assembly (40) formed by winding the electrode (200) according to any preceding claims and a separator (30); and
a case (50) accommodating the electrode assembly (40).

14. The secondary battery according to claim 13, wherein the tab (230) has a thickness of 100 µm or less.
